# EUROPEAN PATENT APPLICATION

(11) **EP 1 808 111 A2**
(43) Date of publication of application: **18.07.2007**
(21) Application number: 07000394.2
(22) Date of filing: 10.01.2007
(51) Int. Cl.: A47J 43/046, A47J 43/07

(54) **Equipment for mixing substances, particularly for preparing drinks in bars/cafes and at home**

(30) Priority: 13.01.2006 IT MO20060003
(71) Applicant: SPM DRINK SYSTEMS SRL, 41057 Spilamberto (MO) (IT)
(72) Inventor: Grampassi, Massimo, 41014 Castelvetro (MO) (IT)
(74) Representative: Brogi, Graziano

(57) **Abstract**

The equipment (1) for mixing substances, particularly for preparing drinks in bars/cafes and at home, comprises a base frame (2) featuring a supporting surface (3) for a container (4) containing two or more substances to be mixed, an impeller (10) for mixing the substances arranged so it can rotate inside the container (4), a fixed blade (21) that can be associated inside the container (4) above the impeller (10), and magnetic entrainment means (19) in rotation of the impeller (10) associated with the base frame (2).

## Description

This invention refers to an equipment for mixing substances, particularly for preparing drinks in bars/cafés and at home.

It is well known that to prepare numerous drinks, such as, for instance, ice coffee, ice tea or the like, two or more substances have to be mixed together, one of which is usually a liquid (coffee, water, milk, etc.), in which the other substances are dissolved, usually in powder form (sugar, powdered tea, barley coffee or other aromatic substance) and/or syrup (aromatic additives), and cubes of ice are added of a size that varies according to need.

Inside public premises such as cafés, bars, pubs or the like, such operation is performed using so-called shakers, meaning containers in which all the substances to be mixed are placed (coffee, water, milk, sugar, tea, additives, ice, etc.), and which are then shaken manually by the bar-attendant so the fluid substances mix together and become cooled on contact with the ice.

These traditional shakers are not without their drawbacks, including the fact that, during mixing, the ice does not only exchange heat with the other substances to be mixed but also with the surface of the shaker and the operator's hands, thereby producing a pointless waste of cooling capacity.

This problem is especially acute when it comes to preparing drinks that require the mixing of small amounts of ice and substances to be mixed such as, for example, shaken ice coffee; when placed in the shaker, the ingredients for preparing the drink build up on the bottom of the container in contact with a limited portion of surface but, once shaken, they come into contact with the entire surface of the container and this restricts the overall cooling of the drink.

Nor should it be forgotten that shaking the shaker is not always a practical and easy operation and can in fact prove tiring for the user.

Another type of equipment for mixing substances consists of traditional kitchen robots, which usually comprise a lower base, containing the power supply, control and movement devices, and an open-top container featuring one or more blades for mixing the ingredients and which can be fitted to the lower base by means of a trip mechanism.

Such mechanism, besides fastening the container to the lower base, permits connecting the container blades to the motor device inside the lower base by means of a mechanical drive, of the gear-wheel coupling type.

This type of equipment also has a number of drawbacks, including the fact that the trip mechanism for the coupling between the lower base and the container is particularly complex from a structural viewpoint.

Neither should the fact be forgotten that the coupling between the container and the lower base necessarily requires the fitting of seals that, inconveniently, have to be changed more or less frequently to prevent the drink from leaking.

A primary aim of this invention is to eliminate the drawbacks of the state of the art complained of above and excogitate an equipment for mixing substances, particularly for preparing drinks in bars/cafés and at home, which allows mixing two or more substances without any effort on the part of the user and without causing pointless heat exchange between the drink and the container in which it is contained or between the container and the operator's hands.

Within the sphere of this technical aim, another purpose of this invention is to be especially simple from a structural viewpoint.

A further purpose of this invention is to achieve the previous aims with a structure that is relatively easy and practical to implement, safe to use and with effective operation, as well as of relatively low cost.

This aim and these purposes are all achieved by this equipment for mixing substances, particularly for preparing drinks in bars/cafés and at home, characterized in that it comprises a base frame featuring at least one supporting surface for a container containing at least two substances to be mixed, at least one impeller for mixing said substances arranged so it can rotate inside said container, at least one substantially fixed blade that can be associated inside said container above said impeller, and magnetic entrainment means in rotation of said impeller associated with said base frame.

Further characteristics and advantages of this invention will appear even more evident from the detailed description of a preferred, but not exclusive, form of embodiment of an equipment for mixing substances, particularly for preparing drinks in bars/cafés and at home, illustrated indicatively by way of non limiting example, in the attached drawings wherein:

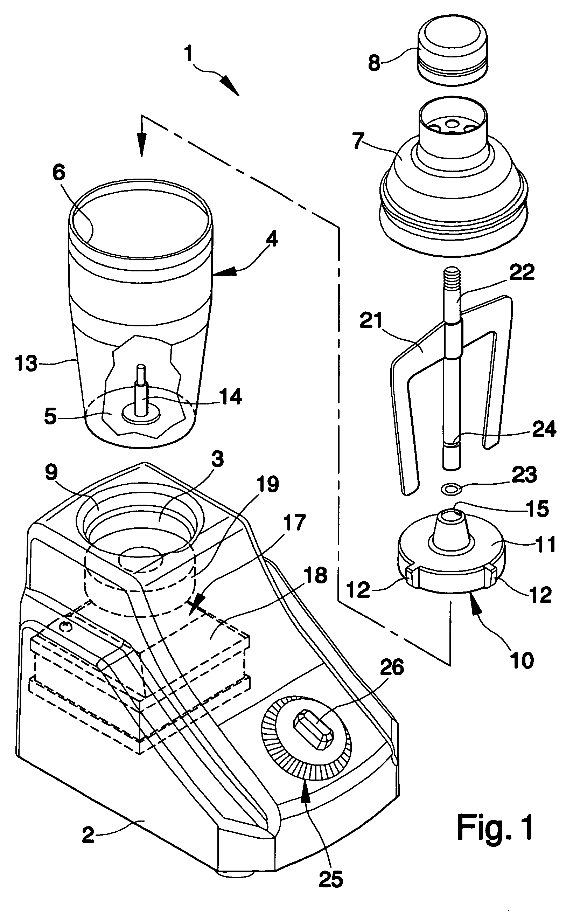

figure 1 is a partially exploded perspective view of the equipment according to the invention;

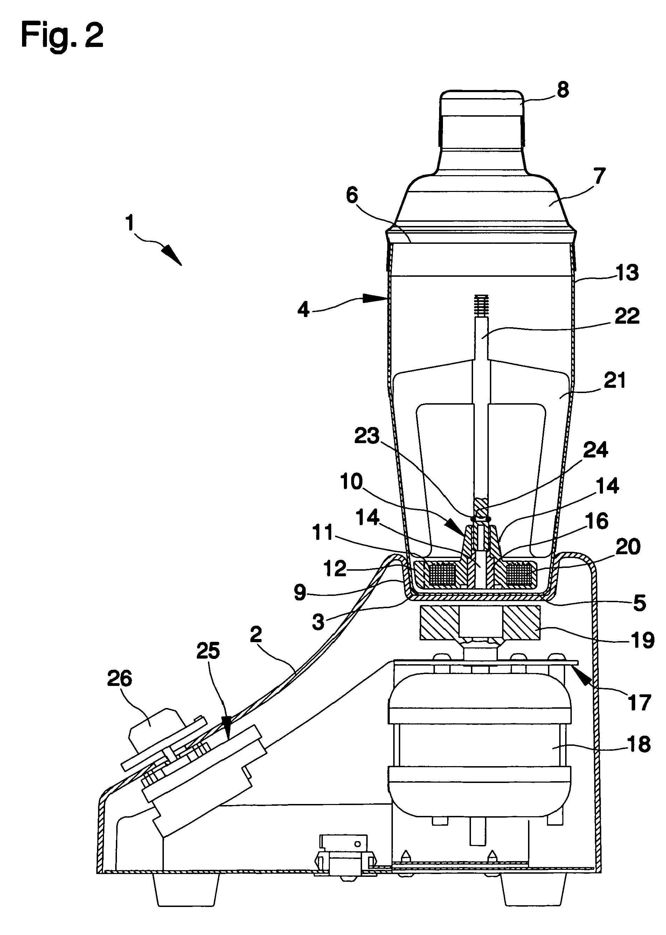

figure 2 is a section view of the equipment according to the invention.

With special reference to such figures, an equipment for mixing substances, particularly for preparing drinks in bars/cafés and at home, has been globally designated by reference number 1.

The equipment 1 comprises a base frame 2 featuring a supporting surface 3 for a container 4 for containing two or more substances to be mixed such as, for instance, coffee and sugar, water and powdered tea, water and a generic aromatic substance, etc., possibly with the addition of ice cubes of varying size.

In the particular form of embodiment of the invention shown in the figures, the container 4 is of the traditional bar shaker type featuring a substantially flat bottom 5 and an upper opening 6 that can be closed with a dispensing lid 7 and closing cap 8.

Other forms of embodiment of the equipment 1 cannot however be excluded in which the container 4 has different shapes and dimensions.

The supporting surface 3 is substantially flat and horizontal and features a centring edge 9 for the bottom 5 of the container 4; once placed on the supporting surface 3, the container 4 is perfectly fitted inside the edge 9.

Inside the container 4, a turning impeller 10 is arranged for mixing the substances which, in detail, is composed of a disc 11, slightly shorter than the bottom 5 of the container 4 and of a series of side blades 12 extending from the disc 11 as far as the side walls 13 of the container 4; the position and shape of the side blades 12 can in any case be different according to need, such as, for example, in the event of the equipment 1 being used to mix neutral granita with aromatic additives or the like.

The impeller 10 is arranged close to the bottom 5 of the container 4 and is engaged in rotation around a rotation axis substantially at right angles to the bottom 5 which is defined by a pin 14 integral with the centre of the bottom itself.

The impeller 10 features a through central hole 15, inside which is a guide bush 16 in rotation on the pin 14, made of polymeric material, for example Rulon®.

When the container 4 is mounted on the supporting surface 3, the impeller 10 can be operated rotating around the pin 14 by means of magnetic entrainment means 17 associated with the base frame 2.

Such magnetic entrainment means comprise motor means 18 arranged inside the base frame 2 and which cause to operate in rotation a first body 19 substantially magnetic and disc-shaped, which is positioned close to the supporting surface 3, below this.

The first body 19 can be rotated around a vertical axis which, in the configuration with the container 4 mounted on the supporting surface 3, is coaxial to the rotation axis of the impeller 10, to which impeller is associated a second body 20 substantially magnetic and sensitive to the rotating movements of the first body 19.

Both the first body 19 and the second body 20 consist of respective permanent magnets.

Inside the container 4 is a substantially fixed blade 21, positioned above the impeller 10 and mounted integral with a support rod 22 that can be screwed longitudinally at the free end of the pin 14.

Such blade, in actual fact, acts as an impediment and obstacle to the rotation of the ice cubes immerged in the substances to be mixed during the rotating operation of the impeller 10.

The blade 21 also makes it possible to convey the substances to be mixed towards the centre of the container 4, to counter the centrifugal force produced by the impeller 10 which, on the contrary, tends to push the substances towards the side walls 13 of the container 4; during use therefore, the fluid substances inside the container 4 move against the ice cubes and favour mixing and melting.

The support rod 22 features a stop 23 for holding the impeller 10 close to the bottom 5 of the container 4, which is usefully made of an elastic ring that can be inserted into a ring-shaped groove 24 obtained in the side surface of the support rod 22.

Once the support rod 22 has been released from the pin 14, the impeller 10 can be removed from the container 4 in order, for example, to clean inside.

Finally, the equipment 1 features automated means 25 for handling and controlling the magnetic entrainment means 17; advantageously, such automated means are of the timed type and comprise a knob 26 for selecting the operating time of the motor means 18.

This invention operates as follows: the substances to be mixed are introduced into the container 4 inside which have been fitted both the impeller 10 and the support rod 22 on which is fitted the blade 21, after which the container 4 is positioned resting on the support surface 3.

At this point, by means of the knob 26, the user selects the mixing time, which automatically determines the start of the motor means 18 and the rotating operation of the first body 19; because of the magnetic attraction between the first and the second bodies 19 and 20, the impeller 10 is forced to rotate causing the mixing of the substances at the bottom 5 of the container 4.

In the event of the container 4 containing ice, this remains, at least in part, blocked by the blade 21, restricting heat exchange with the side walls 13 of the container 4.

It has in actual fact been found how the described invention achieves the set purposes and in particular the fact is underlined that it permits mixing together two or more substances without the drink coming into contact with the entire internal surface of the container, thereby avoiding inconvenient heat exchanges with the container itself.

The particular solution of using magnetic entrainment means also permits using a container with a very simple structure, which can be simply arranged resting on the base frame without the need for complicated coupling mechanisms as in the case of traditional kitchen robots.

Finally, the considerable functionality and versatility must be pointed out of the container of this invention which, once stripped of the impeller and the blade support rod inside, can be conveniently used in the same way as traditional shakers.

The invention thus conceived is susceptible of numerous modifications and variations, all of which falling within the scope of the inventive concept.

Furthermore all the details may be replaced by other elements which are technically equivalent.

In practice, the materials used, as well as the contingent shapes and dimensions, may be any according to requirements without because of this moving outside the protection scope of the following claims.

## Claims

1. Equipment for mixing substances, particularly for preparing drinks in bars/cafés and at home, **characterized in that** it comprises a base frame featuring at least one supporting surface for a container containing at least two substances to be mixed, at least one impeller for mixing said substances arranged so it can rotate inside said container, at least one substantially fixed blade that can be associated inside said container above said impeller, and magnetic entrainment means in rotation of said impeller associated with said base frame.

2. Equipment according to claim 1, **characterized in that** said magnetic entrainment means comprise motor means associated with said base frame and which are able to operate in rotation at least a substantially magnetic first body arranged substantially coaxial to the rotation axis of said impeller, with which at least a substantially magnetic second body is associated.

3. Equipment according to one or more of the preceding claims, **characterized in that** the rotation axis of said first body is substantially vertical.

4. Equipment according to one or more of the preceding claims, **characterized in that** at least one between said first and second body is a permanent magnet.

5. Equipment according to one or more of the preceding claims, **characterized in that** said first body is arranged close to said supporting surface.

6. Equipment according to one or more of the preceding claims, **characterized in that** said first body is arranged below said supporting surface.

7. Equipment according to one or more of the preceding claims, **characterized in that** said impeller is arranged close to the bottom of said container.

8. Equipment according to one or more of the preceding claims, **characterized in that** the rotation axis of said impeller is substantially transversal to the bottom of said container.

9. Equipment according to one or more of the preceding claims, **characterized in that** the rotation axis of said impeller is substantially at right angles to the bottom of said container.

10. Equipment according to one or more of the preceding claims, **characterized in that** the rotation axis of said impeller is defined by a pin associated with the bottom of said container around which said impeller can be engaged.

11. Equipment according to one or more of the preceding claims, **characterized in that** said impeller features a guide bush in rotation on said pin.

12. Equipment according to one or more of the preceding claims, **characterized in that** said impeller comprises a disc slightly shorter than the bottom of said container and at least one side blade extending from said disc as far as the side walls of said container.

13. Equipment according to one or more of the preceding claims, **characterized in that** said blade is associated with a support rod which can be longitudinally associated with the free end of said pin.

14. Equipment according to one or more of the preceding claims, **characterized in that** said rod can be screwed on said pin.

15. Equipment according to one or more of the preceding claims, **characterized in that** it comprises at least one stop of said impeller close to the bottom of said container.

16. Equipment according to one or more of the preceding claims, **characterized in that** said stop is made of an elastic ring that can be inserted into a ring-shaped groove obtained in the side surface of said rod.

17. Equipment according to one or more of the preceding claims, **characterized in that** said supporting surface features a centring edge for the bottom of said container.

18. Equipment according to one or more of the preceding claims, **characterized in that** it comprises automated means for handling and controlling said magnetic entrainment means.

19. Equipment according to one or more of the preceding claims, **characterized in that** said automated handling and controlling means are of the timed type.

20. Equipment according to one or more of the preceding claims, **characterized in that** said automated handling and controlling means comprise at least one knob for selecting the operating time of said magnetic entrainment means.
